# EUROPÄISCHE PATENTSCHRIFT

(11) **EP 4 306 393 B1**
(45) Veröffentlichungstag und Bekanntmachung des Hinweises auf die Patenterteilung: **29.10.2025**
(21) Anmeldenummer: 23183985.3
(22) Anmeldetag: 06.07.2023
(51) Int. Cl.: B62H 5/14

(54) **RAHMENSCHLOSS**
FRAME LOCK
SERRURE DE CADRE

(30) Priorität: 11.07.2022 DE 102022117238
(43) Veröffentlichungstag der Anmeldung: 17.01.2024
(73) Patentinhaber: ABUS August Bremicker Söhne KG, 58292 Wetter-Volmarstein (DE)
(72) Erfinder:
(74) Vertreter: Manitz Finsterwald Patent- und Rechtsanwaltspartnerschaft mbB

(56) Entgegenhaltungen:
- CN-Y- 201 231 806
- ES-U- 246 333
- FR-A- 885 286
- GB-A- 2 049 794
- GB-A- 277 348
- NL-C2- 1 017 815

## Beschreibung

Die Erfindung betrifft ein Rahmenschloss für ein Zweirad, welches zumindest ein Speichenrad aufweist.

Ein Rahmenschloss ist fest am Rahmen eines Zweirades angeordnet, beispielsweise an der Hinterradgabel. Ein Rahmenschloss kann einen Blockierbügel aufweisen, der in einer Blockierstellung einen Aufnahmeraum für das Speichenrad durchquert und somit eine Rotation des Speichenrads verhindert. Das Rahmenschloss dient somit als Wegfahrsperre.

In der jüngeren Vergangenheit erfreuen sich Elektro-Fahrräder (auch als E-Bikes oder Pedelecs bezeichnet) zunehmender Beliebtheit, wobei der elektrische Antrieb wiederum die Ausgestaltung als ein Lastenrad begünstigt, also mit Anbauten für den Transport von Material oder Personen. Elektro-Fahrräder und insbesondere Lastenräder besitzen oftmals einen massiveren Aufbau als herkömmliche Fahrräder mit Antrieb allein durch Muskelkraft. Die Verwendung von Rahmenschlössern kann jedoch erschwert sein, wenn der Blockierbügel in der Blockierstellung eine größere Distanz überwinden muss, etwa aufgrund eines größeren Abstands zwischen den beiden Streben der Hinterradgabel. Insbesondere kann dies die Verwendung eines drehbaren Rundbügels ausschließen und auch die Verwendung eines Schwenkbügels erschweren, da dieser eine relativ große Länge besitzen muss. Ein weiteres Problem kann bei Elektro-Fahrrädern und insbesondere Lastenrädern in der Zugänglichkeit des Rahmenschlosses für die Bedienung durch den Benutzer bestehen. Beispielsweise können in dem Bereich, der sich herkömmlich für die Anbringung eines Rahmenschlosses anbietet, Anbauten angeordnet sein (z.B. Gepäckwanne, Kindersitz), die den Zugang zu einer Verriegelungseinrichtung des Rahmenschlosses für den Benutzer erschweren.

Es ist auch möglich, ein Rahmenschloss mit einer Klobenaufnahme zu versehen, in der ein Kloben einer Kette oder eines Drahtseils aufgenommen und verriegelt werden kann, um zusätzlich zu der Funktion einer Wegfahrsperre ein flexibles Sicherungselement an dem Rahmenschloss verriegeln zu können. Die Kette oder das Drahtseil kann beispielsweise um einen Laternenpfosten gelegt werden, um hierdurch das Zweirad an einem stationären Objekt zu sichern. Auch bezüglich dieser Funktionalität kann sich das Problem eines eingeschränkten Bedienungskomforts ergeben, wenn das Rahmenschloss bzw. dessen Klobenaufnahme durch Anbauten an dem Zweirad nicht gut für den Benutzer zugänglich ist.

CN 201 231 806 Y offenbart ein Rahmenschloss mit den Merkmalen des Oberbegriffs des Anspruchs 1. GB 277 348 A, FR 885 286 A, GB 2 049 794 A, ES 246 333 U und NL 1 017 815 C2 offenbaren weitere Rahmenschlösser mit einer verriegelbaren Blockierstange.

Es ist eine Aufgabe, ein verbessertes Rahmenschloss zu schaffen, das für Elektro-Fahrräder und insbesondere Lastenräder geeignet ist und bei dieser Art von Zweirädern eine komfortable Bedienung ermöglicht.

Diese Aufgabe wird durch ein Rahmenschloss mit den Merkmalen des Anspruchs 1 gelöst.

Ein derartiges Rahmenschloss für ein Zweirad umfasst einen proximalen Führungsabschnitt und einen distalen Führungsabschnitt, die einen Aufnahmeraum für das Speichenrad umgeben, sowie eine von dem proximalen Führungsabschnitt und dem distalen Führungsabschnitt separate Blockierstange, die sich entlang einer Längsachse geradlinig erstreckt. Die Blockierstange weist ein proximales Ende mit einer proximalen Verriegelungsvertiefung und einem Halteabschnitt, sowie ein distales Ende auf. Die Blockierstange ist entlang ihrer Längsachse mit dem distalen Ende voraus durch den proximalen Führungsabschnitt hindurch in den distalen Führungsabschnitt des Rahmenschlosses einführbar, so dass die Blockierstange eine Blockierstellung einnimmt und in der Blockierstellung den Aufnahmeraum für das Speichenrad durchquert, wobei der Halteabschnitt der Blockierstange benachbart zu dem proximalen Führungsabschnitt des Rahmenschlosses zu liegen kommt. An dem proximalen Führungsabschnitt weist das Rahmenschloss eine Verriegelungseinrichtung auf, die dazu ausgebildet ist, die Blockierstange an der proximalen Verriegelungsvertiefung zu verriegeln.

Das Rahmenschloss umfasst also eine geradlinig geformte Blockierstange, die von dem proximalen Führungsabschnitt und dem distalen Führungsabschnitt des Rahmenschlosses separat ausgebildet ist. Die Blockierstange ist somit von dem proximalen Führungsabschnitt und dem distalen Führungsabschnitt entnehmbar und mit dem proximalen Führungsabschnitt oder distalen Führungsabschnitt allenfalls bei manchen Ausführungsformen über ein flexibles Sicherungselement (z.B. Kette oder Drahtseil) verbunden. Die Länge der Blockierstange ist derart gewählt, dass der Abstand zwischen dem proximalen Führungsabschnitt und dem distalen Führungsabschnitt überwunden werden kann, d.h. die Blockierstange ist ausreichend größer als dieser Abstand. Zum Blockieren des Speichenrads des Zweirads wird die Blockierstange mit dem distalen Ende (also dem freien Ende) voraus über eine Einführöffnung des proximalen Führungsabschnitts durch den proximalen Führungsabschnitt hindurch in den distalen Führungsabschnitt des Rahmenschlosses eingeführt (geradlinige Bewegung entlang ihrer Längsachse). Damit der Benutzer diese Einführbewegung händisch vollziehen kann, umfasst die Blockierstange an dem proximalen Ende einen Halteabschnitt (z.B. Griffelement) zum Ergreifen und Halten der Blockierstange. In der Blockierstellung ist der Halteabschnitt der Blockierstange benachbart zu dem proximalen Führungsabschnitt des Rahmenschlosses angeordnet (mit Abstand oder im Wesentlichen dort anliegend).

Um das Einführen der Blockierstange zu erleichtern, können das distale Ende der Blockierstange und/oder der distale Führungsabschnitt des Rahmenschlosses eine Einführschräge aufweisen. Der proximale Führungsabschnitt des Rahmenschlosses kann einen durchgehenden Kanal aufweisen, während der distale Führungsabschnitt ebenfalls einen durchgehenden Kanal aufweisen kann, wie nachfolgend noch erläutert wird. Die genannten Führungsabschnitte des Rahmenschlosses sichern die eingeführte Blockierstange gegen eine seitliche Bewegung und können die eingeführte Blockierstange insbesondere umfänglich geschlossen umgeben.

Das Rahmenschloss weist an dem proximalen Führungsabschnitt eine Verriegelungseinrichtung auf (z.B. Schließzylinder, wie nachfolgend noch erläutert wird). Die Blockierstange weist an dem proximalen Ende eine proximale Verriegelungsvertiefung auf (z.B. Ringnut). Die Verriegelungseinrichtung ist dazu ausgebildet, durch einen Eingriff in die proximale Verriegelungsvertiefung die Blockierstange in der Blockierstellung zu verriegeln.

Da die Blockierstange über den proximalen Führungsabschnitt des Rahmenschlosses in den Aufnahmeraum für das Speichenrad eingeführt wird, muss die Blockierstange auch an der betreffenden Seite des Speichenrads bzw. des Zweirads (proximale Seite) wieder entnommen werden, wenn das Zweirad für eine Fahrt freigegeben werden soll. Dadurch, dass an dieser (proximalen) Seite auch die Verriegelungseinrichtung angeordnet ist (an dem proximalen Führungsabschnitt), kann der Benutzer das Rahmenschloss komfortabel von einer einzigen Seite des Zweirads aus bedienen, ohne die Seite wechseln oder sich über das Speichenrad hinüber beugen zu müssen (sofern dies bei dem betreffenden Zweirad, z.B. Elektro-Fahrrad oder Lastenrad, überhaupt möglich ist). Mit anderen Worten kann von derselben Seite des Zweirads aus die Blockierstange zunächst entriegelt und danach entnommen werden. Dies vereinfacht die Handhabung, falls eine mechanische Verriegelungseinrichtung betätigt werden muss (z.B. mittels eines Schlüssels). Im Falle einer elektromechanischen Verriegelungseinrichtung kann dies ebenfalls die Handhabung vereinfachen, wenn die Verriegelungseinrichtung händisch betätigt werden muss (z.B. Eingabe eines Codes an einem Tastenfeld; Bestätigung eines drahtlos übermittelten Entriegelungsbefehls durch Tastenbetätigung im Falle einer automatischen Authentisierung bei Annäherung; Hinhalten eines RFID-Transponders oder eines NFC-Chips). Auch können eventuelle Verbindungsprobleme im Zusammenhang mit einer drahtlosen Code- oder Befehlsübermittlung aufgrund des geringen Abstands des Benutzers zu der proximalen Seite vermieden werden (z.B. Smartphone im Rucksack des Benutzers führt per Bluetooth automatisch eine Authentisierung durch).

Die Blockierstange weist nicht nur an dem proximalen Ende eine proximale Verriegelungsvertiefung, sondern auch an dem distalen Ende eine distale Verriegelungsvertiefung auf (z.B. Ringnut), wobei die Blockierstange entlang ihrer Längsachse mit dem distalen Ende voraus durch den distalen Führungsabschnitt des Rahmenschlosses hindurch in den proximalen Führungsabschnitt einführbar ist, so dass die Blockierstange - alternativ zu der genannten Blockierstellung - in einer entgegengesetzten Blockierstellung den Aufnahmeraum für das Speichenrad durchquert und der Halteabschnitt der Blockierstange benachbart zu dem distalen Führungsabschnitt zu liegen kommt. Die Verriegelungseinrichtung ist dazu ausgebildet, die Blockierstange somit wahlweise an der distalen Verriegelungsvertiefung zu verriegeln.

Der distale Führungsabschnitt kann hierfür einen durchgehenden Kanal aufweisen, um einen Durchtritt der Blockierstange zu ermöglichen. Die proximale Verriegelungsvertiefung und die distale Verriegelungsvertiefung können gleichartig ausgebildet sein (z.B. gleiche Breite und Tiefe eine jeweilige Ringnut), um ein problemloses Verriegeln zu ermöglichen. Das Rahmenschloss kann dazu ausgebildet sein, dass in der jeweiligen Endposition der Blockierstange die proximale Verriegelungsvertiefung und die distale Verriegelungsvertiefung jeweils in der gleichen Position relativ zu der Verriegelungseinrichtung angeordnet sind, um ein problemloses Verriegeln zu ermöglichen. Die jeweilige Endposition der Blockierstange - entsprechend den beiden einander entgegengesetzten Einführrichtungen der Blockierstange - kann insbesondere aufgrund eines jeweiligen Anschlags definiert sein (z.B. Anschlagen des Halteabschnitts der Blockierstange an dem jeweiligen Führungsabschnitt des Rahmenschlosses).

Eine derartige Ausgestaltung mit der Möglichkeit einer zusätzlichen entgegengesetzten Blockierstellung der Blockierstange erlaubt einen besonders flexiblen Einsatz des Rahmenschlosses für den Benutzer, beispielsweise wenn in der Umgebung des geparkten Zweirads lediglich an einer Seite ein stationäres Objekt zur Verfügung steht, an dem das Zweirad mittels der Blockierstange und eines daran befestigten flexiblen Sicherungselements (z.B. Kette oder Drahtseil) gesichert werden soll.

Bei manchen Ausführungsformen kann die Verriegelungseinrichtung einen Schließzylinder aufweisen, der mittels eines zugeordneten Schlüssels betätigbar ist, wobei der Schließzylinder eine Schlüsseleinführöffnung für den zugeordneten Schlüssel aufweist, und wobei die Schlüsseleinführöffnung relativ zu dem proximalen Führungsabschnitt des Rahmenschlosses (insbesondere relativ zu der dortigen Einführöffnung für die Blockierstange) entlang einer Versatzrichtung versetzt ist. Diese Versatzrichtung kann insbesondere entlang der Erstreckungsrichtung des Rahmenabschnitts des Zweirads verlaufen, an dem der proximale Führungsabschnitt angeordnet ist (z.B. Hinterradgabel). Bei derartigen Ausführungsformen kann die Verriegelungseinrichtung einen Riegel aufweisen, der zwischen einer Verriegelungsstellung und einer Entriegelungsstellung beweglich gelagert ist, wobei der Riegel in der Verriegelungsstellung in die proximale Verriegelungsvertiefung der Blockierstange eingreift und hierdurch die Blockierstange in der Blockierstellung verriegelt. Der Riegel kann in der Entriegelungsstellung die Blockierstange für eine Entnahme aus dem proximalen Führungsabschnitt und dem distalen Führungsabschnitt des Rahmenschlosses freigeben. Der Riegel kann mittels des Schließzylinders (insbesondere über eine Antriebsabschnitt des Schließzylinders) im Wesentlichen geradlinig (d.h. translatorisch) entlang einer Riegelbewegungsrichtung angetrieben werden, wobei die Riegelbewegungsrichtung parallel oder schräg zu der Versatzrichtung verläuft. Im Falle eines schrägen Verlaufs kann ein spitzer Winkel der Riegelbewegungsrichtung relativ zu der Versatzrichtung vorgesehen sein, insbesondere mit einem Wert aus dem Bereich größer 0 Grad bis 45 Grad, insbesondere aus dem Bereich größer 0 Grad bis 30 Grad.

Ein derartiger Riegel, der im Wesentlichen geradlinig beweglich ist und zwischen dem Schließzylinder und der Blockierstange wirksam ist, kann große Abstände zwischen dem Schließzylinder und der Blockierstange überwinden. Dies ist aus dem folgenden Grund wichtig. Um sowohl die Blockierstange in den proximalen Führungsabschnitt des Rahmenschlosses als auch den Schlüssel in den Schließzylinder von derselben Seite des Speichenrads bzw. des Zweirads aus komfortabel einführen zu können, müssen die jeweiligen Einführöffnungen ausreichend beabstandet sein, damit keine gegenseitige Behinderung erfolgt. Ein Schlüssel ist oftmals an einem Schlüsselbund befestigt, der in Abhängigkeit von der Anzahl der Schlüssel ein gewisses Volumen einnehmen kann. An dem proximalen Ende der Blockierstange ist zumindest die Handhabe ausgebildet, und zusätzlich kann bei manchen Ausführungsformen eine Kette oder ein Drahtseil befestigt sein, wie nachfolgend noch erläutert wird. Wenn die Schlüsseleinführöffnung des Schließzylinders zu nahe an der Einführöffnung für die Blockierstange angeordnet ist, besteht die Gefahr, dass der Benutzer mit seiner Hand an der Handhabe der Blockierstange anstößt. Durch die Verwendung eines im Wesentlichen geradlinig beweglichen Riegels kann dieser Abstand nahezu beliebig vergrößert werden, ohne dass das Rahmenschloss im Bereich des proximalen Führungsabschnitts und des Schließzylinders eine breitere Bauform erhalten muss. Insbesondere kann ein solcher Riegel länglich ausgebildet und entlang seiner Längsachse beweglich gelagert sein.

Dieser Vorteil kann auch im Falle der genannten elektromechanischen Verriegelungseinrichtung bedeutsam sein. Anstelle eines rein mechanischen Schließzylinders kann die Verriegelungseinrichtung nämlich bei manchen Ausführungsformen einen elektronischen Schließzylinder aufweisen. Der elektronische Schließzylinder kann beispielsweise einen Elektromotor oder einen Hubmagneten als Antriebseinrichtung aufweisen. Ein derartiger elektronischer Schließzylinder kann - anstelle eines mechanischen Schlüssels - mittels eines zugeordneten elektronischen oder elektromagnetischen Identmittels entriegelbar sein (z.B. RFID-Transponder, NFC-Chip, per Bluetooth oder anderweitig drahtlos übermittelter Code). Der elektronische Schließzylinder (insbesondere eine elektronische Steuereinrichtung desselben) kann eine Authentisierungsfläche für das zugeordnete Identmittel aufweisen. Ein solche Authentisierungsfläche kann bei manchen Ausführungsformen insbesondere an einer Position angeordnet sein, die im Falle eines mechanischen Schließzylinders der Schlüsseleinführöffnung entspricht, an einer Außenseite des Rahmenschlosses. Die Authentisierungsfläche kann - entsprechend der vorstehend erläuterten Schlüsseleinführöffnung - relativ zu dem proximalen Führungsabschnitt des Rahmenschlosses (insbesondere relativ zu der dortigen Einführöffnung für die Blockierstange) entlang einer Versatzrichtung versetzt sein. Die Verriegelungseinrichtung kann wiederum einen Riegel aufweisen, der zwischen einer Verriegelungsstellung und einer Entriegelungsstellung beweglich gelagert ist, wobei der Riegel in der Verriegelungsstellung in die proximale Verriegelungsvertiefung der Blockierstange eingreift und hierdurch die Blockierstange verriegelt, wenn die Blockierstange sich in der Blockierstellung befindet. Der Riegel kann in der Entriegelungsstellung die Blockierstange für eine Entnahme aus dem proximalen Führungsabschnitt und dem distalen Führungsabschnitt des Rahmenschlosses freigeben. Der Riegel kann mittels des elektronischen Schließzylinders (insbesondere über eine Antriebsabschnitt des Schließzylinders) im Wesentlichen geradlinig (d.h. translatorisch) entlang einer Riegelbewegungsrichtung angetrieben werden, wobei die Riegelbewegungsrichtung parallel oder schräg zu der Versatzrichtung verläuft, wie vorstehend im Zusammenhang mit dem mechanischen Schließzylinder erläutert.

Durch die Verwendung eines im Wesentlichen geradlinig beweglichen Riegels kann der Abstand zwischen der Einführöffnung für die Blockierstange und der Authentisierungsfläche des elektronischen Schließzylinders entlang der Erstreckungsrichtung des Rahmenabschnitts des Zweirads, an dem der proximale Führungsabschnitt angeordnet ist (z.B. Hinterradgabel), nahezu beliebig vergrößert werden. Hierdurch wird die Bedienung des elektronischen Schließzylinders - insbesondere mittels eines Identmittels, das nahe an die Authentisierungsfläche gehalten werden muss - erleichtert, ohne dass die Gefahr besteht, dass der Benutzer mit seiner Hand an der Handhabe der Blockierstange anstößt.

Was die weitere Ausgestaltung der Verriegelungseinrichtung (insbesondere bei Verwendung eines mechanischen oder elektronischen Schließzylinders) betrifft, so kann bei manchen Ausführungsformen eine Zwangsführung des Riegels in beiden Bewegungsrichtungen vorgesehen sein. Bei derartigen Ausführungsformen kann der Schließzylinder (insbesondere ein drehbarer Zylinderkern des Schließzylinders) einen drehbaren Antriebsabschnitt aufweisen, der mit dem Riegel gekoppelt ist, um den Riegel wahlweise in Richtung der Entriegelungsstellung oder in Richtung der Verriegelungsstellung anzutreiben.

Bei anderen Ausführungsformen kann hingegen eine Verriegelungsautomatik vorgesehen sein, d.h. durch ein vollständiges Einführen der Blockierstange wird die Blockierstange automatisch verriegelt. Bei derartigen Ausführungsformen kann die Verriegelungseinrichtung ferner eine Vorspannfeder aufweisen, die den Riegel in Richtung der Verriegelungsstellung vorspannt, wobei der Schließzylinder (insbesondere ein drehbarer Zylinderkern des Schließzylinders) einen drehbaren Antriebsabschnitt aufweisen kann, der mit dem Riegel gekoppelt ist, um den Riegel wahlweise in Richtung der Entriegelungsstellung anzutreiben, also entgegen der Federvorspannung aus der Verriegelungsvertiefung der Blockierstange herauszuziehen.

Das Rahmenschloss kann generell unterschiedliche bauliche Konfigurationen aufweisen, wie nachfolgend erläutert wird.

Bei manchen Ausführungsformen kann das Rahmenschloss einen Verbindungabschnitt aufweisen, der den proximalen Führungsabschnitt und den distalen Führungsabschnitt des Rahmenschlosses fest miteinander verbindet. Der proximale Führungsabschnitt und der distale Führungsabschnitt bilden somit eine Baueinheit, die insbesondere auch die Verriegelungseinrichtung umfasst. Der Verbindungsabschnitt kann beispielsweise ein Schlossgehäuse umfassen, das insbesondere U-förmig geformt sein kann. Eine derartige Baueinheit kann an einem Rahmen eines Zweirads (z.B. Hinterradgabel) befestigt werden (aufgesetzte Baueinheit).

Bei manchen Ausführungsformen können der proximale Führungsabschnitt und der distale Führungsabschnitt des Rahmenschlosses hingegen separat voneinander ausgebildet sein. Der proximale Führungsabschnitt und der distale Führungsabschnitt können beispielsweise als separate Module an einem Rahmen eines Zweirads (z.B. Hinterradgabel) befestigt werden (aufgesetzte Module). Alternativ hierzu können der proximale Führungsabschnitt und der distale Führungsabschnitt als separate Module in einen Rahmen des Zweirads (z.B. Hinterradgabel) integriert werden, also in einen Abschnitt des Rahmens eingesetzt werden oder einen Abschnitt des Rahmens zumindest teilweise ersetzen (integrierte Module).

Was die Blockierstange betrifft, so kann diese an dem proximalen Ende ferner eine Befestigungseinrichtung (z.B. Öse oder Hülse) für eine Kette, ein Drahtseil oder ein sonstiges flexibles Sicherungselement aufweisen. An dem proximalen Ende der Blockierstange kann ein derartiges flexibles Sicherungselement dauerhaft befestigt sein. Das andere Ende des flexiblen Sicherungselements kann ein freies Ende bilden, an dem beispielsweise ein Ring befestigt oder eine geschlossene Schlaufe gebildet sein kann. Alternativ hierzu kann das andere Ende des flexiblen Sicherungselements dauerhaft an dem Rahmenschloss befestigt sein. Die Verwendung eines solchen flexiblen Sicherungselements kann sich auch als Erinnerung an den verriegelten Zustand des Rahmenschlosses als vorteilhaft erweisen, nämlich um dem Benutzer vor dem Losfahren mit dem Zweirad zu signalisieren, dass das Rahmenschloss verriegelt ist. Mit anderen Worten kann durch das zusätzliche flexible Sicherungselement nicht nur eine Sicherungsfunktion erfüllt werden, sondern auch verhindert werden, dass der Benutzer unbeabsichtigt versucht, im verriegelten Zustand des Rahmenschlosses loszufahren mit der Folge, dass die eingeführte Blockierstange im Bereich der Speichen zu Schäden führen könnte.

Der Blockierstange kann eine Halterung zugeordnet sein, um die Blockierstange - wenn die Blockierstange aus dem Rahmenschloss entnommen ist - während der Fahrt mit dem Zweirad komfortabel mitführen zu können.

Zusammengefasst kann bei einem Rahmenschloss mit einer entnehmbaren Blockierstange durch Verwendung eines im Wesentlichen geradlinig beweglichen Riegels, der an einem Ende von einem Schließzylinder angetrieben und an dem anderen Ende in Eingriff mit der Blockierstange gelangen kann, ein geeigneter, insbesondere ausreichend großer Abstand zwischen einer Schlüsseleinführöffnung des Schließzylinders und einer Einführöffnung für die Blockierstange verwirklicht werden, sodass der Schließzylinder (mittels eines zugeordneten Schlüssels) und die Blockierstange (für ein Einführen oder Entnehmen) von derselben Seite des Zweirads aus komfortabel bedient werden können.

Zusammengefasst weist bei einem Rahmenschloss mit einer entnehmbaren Blockierstange, bei dem eine Verriegelungseinrichtung für die Blockierstange lediglich an einer Seite des Rahmenschlosses vorgesehen ist und die Blockierstange jedoch wahlweise von der einen Seite des Rahmenschlosses oder von der anderen Seite des Rahmenschlosses aus in das Rahmenschloss eingeführt werden kann, die Blockierstange an beiden Enden eine jeweilige Verriegelungsvertiefung für einen Riegel des Rahmenschlosses auf, wobei die beiden Verriegelungsvertiefungen gleichartig ausgebildet sind, sodass die Blockierstange unabhängig von der gewählten Einführrichtung mittels der Verriegelungseinrichtung an dem Rahmenschloss verriegelt werden kann.

Das Rahmenschloss kann unterschiedliche bauliche Konfigurationen aufweisen (aufgesetzte Baueinheit, aufgesetzte Module, integrierte Module).

Die Erfindung wird nachfolgend lediglich beispielhaft anhand der Zeichnungen erläutert.
- Fig. 1: zeigt eine Perspektivansicht eines Teils eines Hinterbaus eines Zweirads mit einem integrierten Rahmenschloss und einer eingeführten Blockierstange, von einer Bedienungsrichtung aus.
- Fig. 2: zeigt eine der Fig. 1 entsprechende, teilweise aufgeschnittene Perspektivansicht.
- Fig. 3: zeigt eine Perspektivansicht eines integrierten Rahmenschlosses mit eingeführter Blockierstange entsprechend Fig. 1, entgegen einer Bedienungsrichtung betrachtet.
- Fig. 4: zeigt eine aufgeschnittene Perspektivansicht des Rahmenschlosses gemäß Fig. 3.
- Fig. 5: zeigt eine weitere aufgeschnittene Perspektivansicht des Rahmenschlosses gemäß Fig. 3.
- Fig. 6: zeigt eine Explosionsansicht von Teilen des Rahmenschlosses gemäß Fig. 3.
- Fig. 7: zeigt eine der Fig. 1 entsprechende Perspektivansicht, wobei die Blockierstange sich in einer entgegengesetzten Blockierstellung befindet.

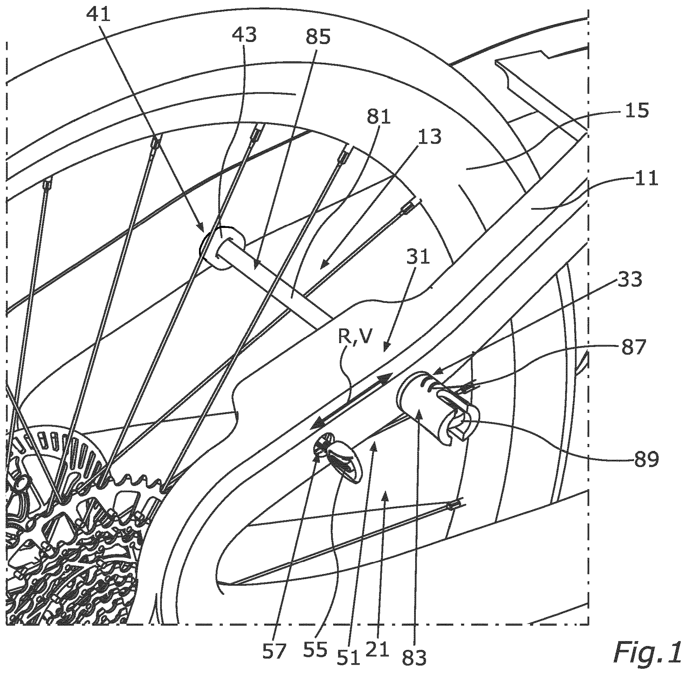

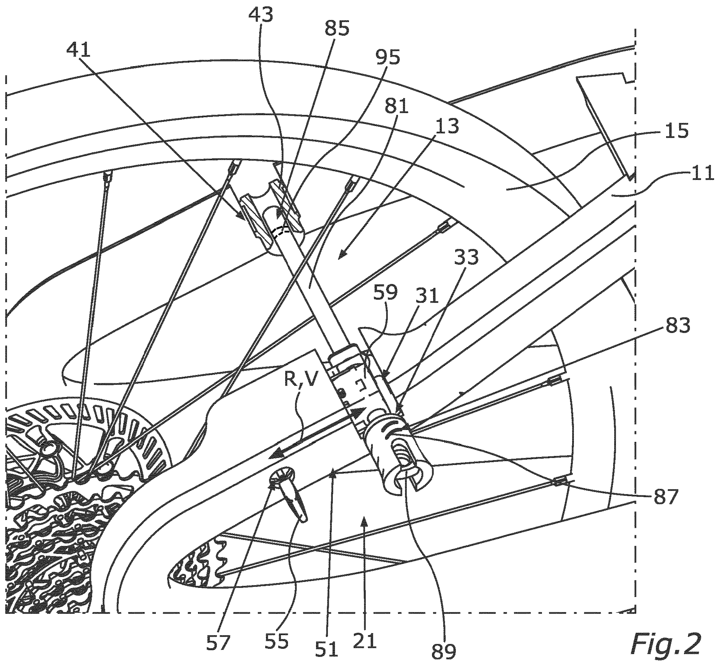

Fig. 1 und 2 zeigen eine jeweilige Perspektivansicht eines Teils eines Hinterbaus eines Zweirads von einer Bedienungsrichtung aus. Der Hinterbau des Zweirads weist eine Hinterradgabel 11 und - in einem durch die Hinterradgabel 11 begrenzten Aufnahmeraum 13 - ein Speichenrad 15 auf. In die Hinterradgabel 11 des Zweirads ist ein Rahmenschloss 21 integriert.

Das Rahmenschloss 21 umfasst einen proximalen Führungsabschnitt 31 und einen distalen Führungsabschnitt 41 sowie eine Blockierstange 81. Die Blockierstange 81 erstreckt sich geradlinig zwischen einem proximalen Ende 83 und einem distalen Ende 85. An dem proximalen Ende 83 weist die Blockierstange 81 einen Halteabschnitt 87 zum Ergreifen und Halten der Blockierstange 81 sowie eine Befestigungseinrichtung 89 in Form einer Öse zum Befestigen eines flexiblen Sicherungselements (nicht gezeigt) auf.

Die Blockierstange 81 kann wahlweise von dem proximalen Führungsabschnitt 31 und dem distalen Führungsabschnitt 41 des Rahmenschlosses 21 entfernt werden, oder entlang ihrer Längsachse mit dem distalen Ende 85 voraus durch den proximalen Führungsabschnitt 31 hindurch in den distalen Führungsabschnitt 41 eingeführt werden, um in einer Blockierstellung den Aufnahmeraum 13 für das Speichenrad 15 zu durchqueren. Fig. 1 zeigt die Blockierstellung der Blockierstange 81. In der Blockierstellung ist der Halteabschnitt 87 der Blockierstange 81 benachbart zu dem proximalen Führungsabschnitt 31 außerhalb desselben angeordnet. Der proximale Führungsabschnitt 31 weist eine Einführöffnung 33 auf, die in einen durchgehenden Kanal für die Blockierstange 81 mündet. Wie die lediglich zu Illustrationszwecken teilweise aufgeschnittene Perspektivansicht gemäß Fig. 2 erkennen lässt, umfasst der distale Führungsabschnitt 41 eine Führungshülse 43, die das distale Ende 85 der Blockierstange 81 aufnimmt und in seitlicher Richtung sichert. Die Führungshülse 43 ist hohlzylindrisch und bildet somit einen durchgehenden Kanal.

Das Rahmenschloss 21 weist an dem proximalen Führungsabschnitt 31 eine Verriegelungseinrichtung 51 auf, die dazu ausgebildet ist, die Blockierstange 81 in der gezeigten Blockierstellung zu verriegeln. Die Verriegelungseinrichtung 51 weist einen Schließzylinder 53 auf, der mittels eines zugeordneten Schlüssels 55 betätigbar ist. Der Schließzylinder 53 weist eine Schlüsseleinführöffnung 57 für den Schlüssel 55 auf. Die Schlüsseleinführöffnung 57 ist relativ zu dem proximalen Führungsabschnitt 31 des Rahmenschlosses und insbesondere relativ zu der Einführöffnung 33 für die Blockierstange 81 entlang einer Versatzrichtung V versetzt.

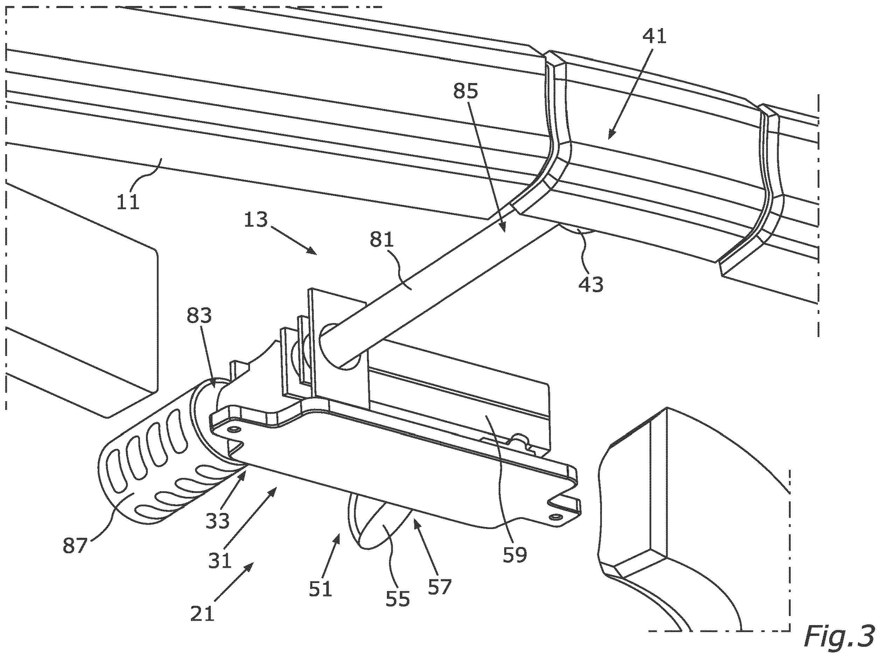

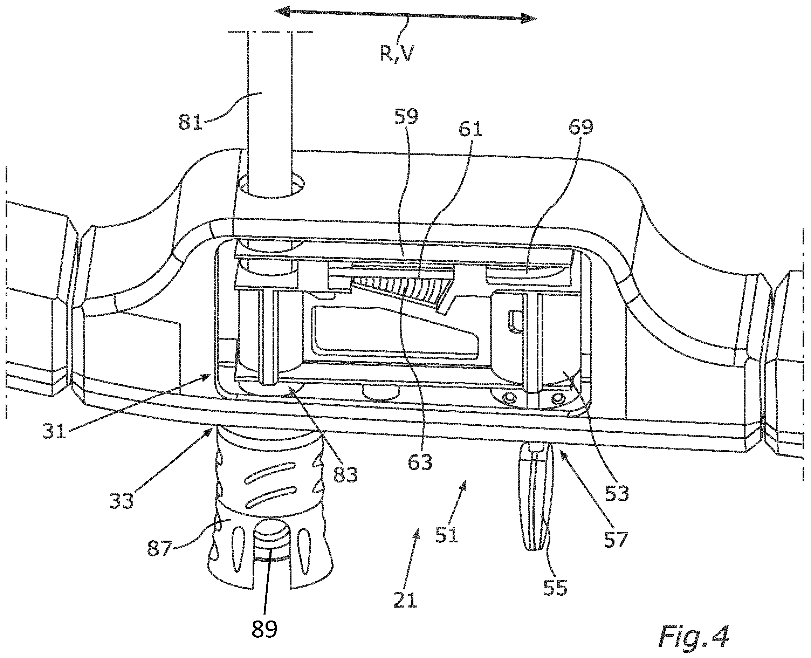

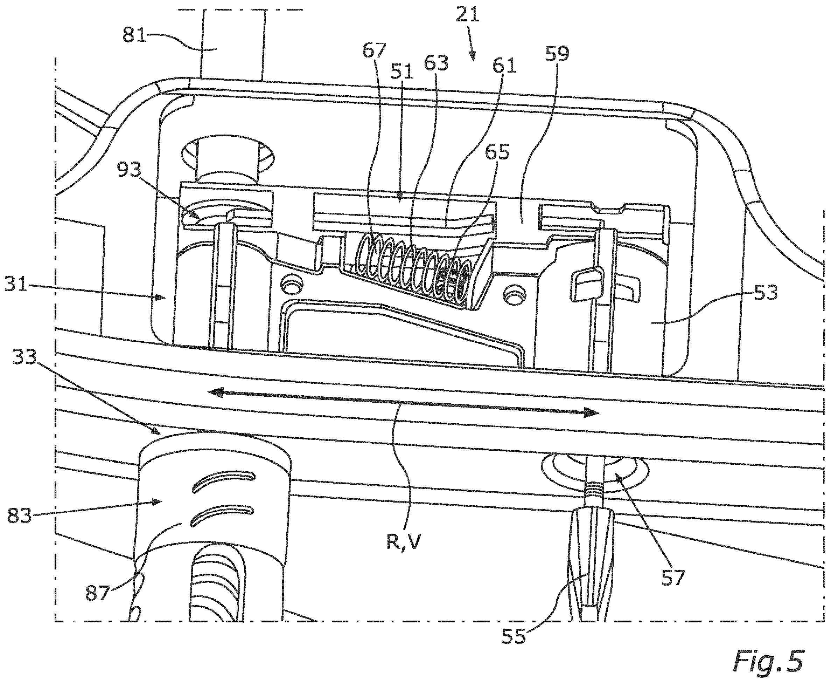

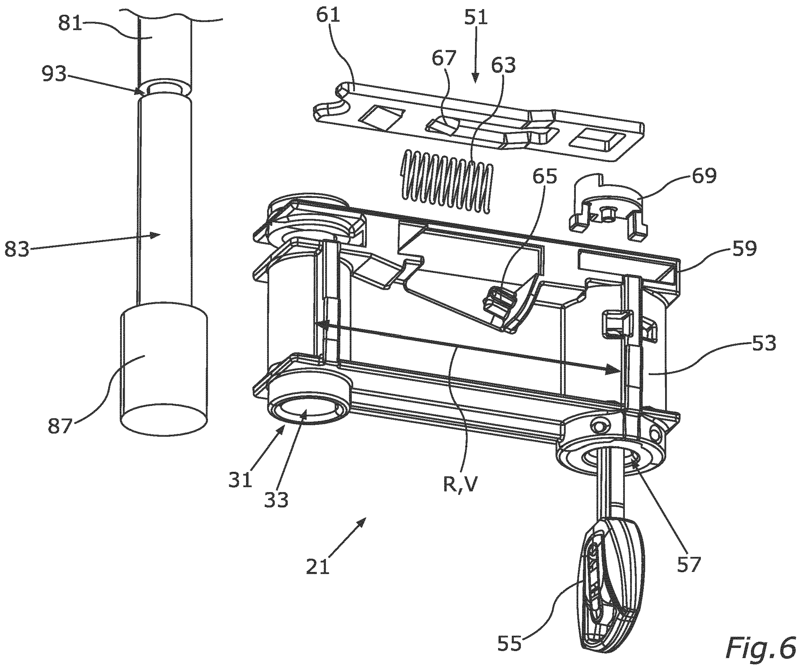

Nachfolgend wird die Verriegelungseinrichtung 51 anhand der Fig. 3 bis 6 genauer erläutert. Die Verriegelungseinrichtung 51 umfasst ein Gehäuse 59, einen Riegel 61 und eine Vorspannfeder 63. Der Riegel 61 ist einteilig ausgebildet (z.B. als ein Stanzbiegeteil). Der Riegel 61 ist in dem Gehäuse 59 zwischen einer Verriegelungsstellung und einer Entriegelungsstellung im Wesentlichen geradlinig entlang einer Riegelbewegungsrichtung R beweglich gelagert. Die als Druckfeder wirksame Vorspannfeder 63 ist zwischen dem Gehäuse 59 (Einhängezapfen 65) und dem Riegel 61 (Einhängezunge 67) eingehängt (vgl. Fig. 5 und 6) und spannt den Riegel 61 in die Verriegelungsstellung vor, also in Richtung der Blockierstange 81.

In der Verriegelungsstellung greift der Riegel 61 entsprechend der von der Vorspannfeder 63 ausgeübten Kraft in eine proximale Verriegelungsvertiefung 93 ein, die an dem proximalen Ende 83 der Blockierstange 81 in Form einer Ringnut ausgebildet ist (vgl. Fig. 5 und 6). Hierdurch ist die Blockierstange 81 in der Blockierstellung verriegelt.

Der Schließzylinder 53 ist in dem Gehäuse 59 aufgenommen und kann mittels des Schlüssels 55 drehbetätigt werden. Durch Drehen des eingeführten Schlüssels 55 kann ein exzentrischer Antriebsabschnitt 69 des Schließzylinders 53, der an dem der Schlüsseleinführöffnung 57 abgewandten Ende des Schließzylinders 53 angeordnet ist, wahlweise gedreht werden. Durch eine Drehbetätigung des Schlüssels 55 in einer Entriegelungsrichtung kann über den drehbaren Antriebsabschnitt 69 des Schließzylinders 53 der Riegel 61 entgegen seiner Vorspannung in die Entriegelungsstellung zurückgezogen werden, sodass der Riegel 61 die Blockierstange 81 für eine Entnahme aus dem proximalen Führungsabschnitt 31 und somit auch aus dem distalen Führungsabschnitt 41 des Rahmenschlosses 21 und dem gesamten Aufnahmeraum 13 (vgl. Fig. 1 und 2) freigibt.

Die Schlüsseleinführöffnung 57 für den Schlüssel 55 und die Einführöffnung 33 des proximalen Führungsabschnitts 31 für die Blockierstange 81 weisen in dieselbe Richtung und sind entlang der Versatzrichtung V beabstandet. Der Riegel 61 kann durch den in den Riegel 61 eingreifenden Antriebsabschnitt 69 des Schließzylinders 53 im Wesentlichen geradlinig entlang der Riegelbewegungsrichtung R angetrieben werden. Die Riegelbewegungsrichtung R verläuft im Wesentlichen parallel zu der Versatzrichtung V. "Im Wesentlichen" bedeutet, dass die beiden Richtungen R, V auch in einem (geringen) spitzen Winkel schräg zueinander ausgerichtet sein können und dass der Riegel 61 auch ein gewisses Bewegungsspiel entlang oder entgegen Einführrichtung der Blockierstange 81 besitzen und somit geringfügig verkippen kann. Durch den im Wesentlichen parallelen Verlauf der Riegelbewegungsrichtung R zu der Versatzrichtung V kann durch die Wahl der Länge des Riegels 61 der Abstand zwischen der Schlüsseleinführöffnung 57 für den Schlüssel 55 und der Einführöffnung 33 für die Blockierstange 81 derart festgelegt werden, dass die Bedienung des Schließzylinders 53 nicht von der Blockierstange 81 oder eines daran befestigten flexiblen Sicherungselements (z.B. Kette oder Drahtseil) behindert wird. Mit anderen Worten kann aufgrund der im Wesentlichen geradlinigen Beweglichkeit des länglichen Riegels 61 ein Abstand entlang der Versatzrichtung V festgelegt werden, der eine komfortable Bedienung sowohl der Blockierstange 81 als auch des Schließzylinders 53 von derselben Seite des Speichenrads 15 bzw. des Zweirads aus ermöglicht.

Bei dem gezeigten Ausführungsbeispiel ist für die Verriegelung der Blockierstange 81 mittels des vorgespannten Riegels 61 eine Automatikfunktion realisiert. Alternativ hierzu kann der Riegel 61 sowohl in der Entriegelungsrichtung als auch in der Verriegelungsrichtung zwangsgeführt sein. Beispielsweise kann der drehbare Antriebsabschnitt 69 des Schließzylinders 53 derart mit dem Riegel 61 gekoppelt sein, dass der Riegel 61 durch entsprechende Drehbetätigung des Schließzylinders 53 wahlweise in Richtung der Entriegelungsstellung oder in Richtung der Verriegelungsstellung angetrieben wird.

Bei dem in Fig. 1 bis 6 gezeigten Ausführungsbeispiel umfasst die Verriegelungseinrichtung 51 einen mechanischen Schließzylinder 53. Alternativ hierzu kann die Verriegelungseinrichtung 51 einen elektronischen Schließzylinder aufweisen, der insbesondere einen entsprechenden Antriebsabschnitt 69 zum Antreiben des Riegels 61 aufweisen kann und anstelle des mechanischen Schlüssels 55 mittels eines elektronischen Identmittels (z.B. RFID-Transponder, NFC-Chip, per Bluetooth übermittelter Code) betätigt wird. Eine solche Betätigung kann an einer Authentisierungsfläche erfolgen (insbesondere zwar kontaktlos, jedoch in enger räumlicher Nähe), die hinsichtlich ihrer Anordnung der Schlüsseleinführöffnung 57 entsprechen kann.

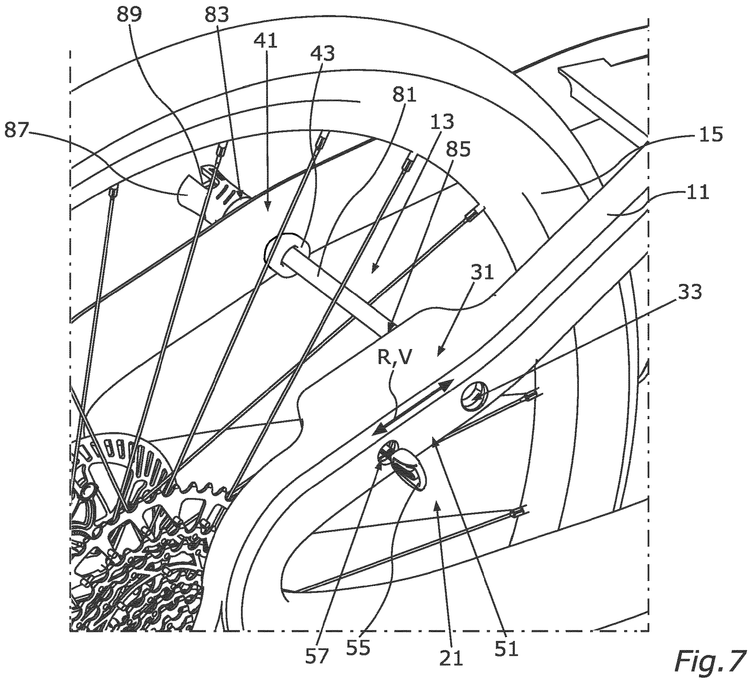

Gemäß Fig. 1 und 2 kann die Blockierstange 81 von derselben Seite des Speichenrads 15 bzw. des Zweirads aus in die Führungsabschnitte 31, 41 des Rahmenschlosses 21 eingeführt werden wie der Schlüssel 55 in den Schließzylinder 53. Fig. 7 zeigt, dass die Blockierstange 81 nicht nur an dem proximalen Ende 83 eine proximale Verriegelungsvertiefung 93, sondern zusätzlich auch an dem distalen Ende 85 eine distale Verriegelungsvertiefung 95 in Form einer Ringnut aufweist. Eine solche distale Verriegelungsvertiefung 95 ist in Fig. 2 gestrichelt gezeigt.

Gemäß Fig. 7 kann die Blockierstange 81 auch mit dem distalen Ende 85 voraus zunächst durch den distalen Führungsabschnitt 41 des Rahmenschlosses 21 hindurch in den Aufnahmeraum 13 für das Speichenrad 15 und schließlich in den proximalen Führungsabschnitt 31 des Rahmenschlosses 21 eingeführt werden, so dass die Blockierstange 81 in einer (im Vergleich zu Fig. 1 und 2) entgegengesetzten Blockierstellung den Aufnahmeraum 13 durchquert. Der Halteabschnitt 87 der Blockierstange 81 ist somit benachbart zu dem distalen Führungsabschnitt 41 angeordnet, wie dies in Fig. 7 gezeigt ist. In dieser entgegengesetzten Blockierstellung kann die Verriegelungseinrichtung 51 die Blockierstange 81 an der zusätzlichen distalen Verriegelungsvertiefung 95 verriegeln. Um einen Durchtritt der Blockierstange 81 zu ermöglichen, weist der distale Führungsabschnitt 41 einen durchgehenden Kanal auf, wie dies in Fig. 2 gezeigt ist.

Eine derartige Ausgestaltung mit der Möglichkeit einer zusätzlichen entgegengesetzten Blockierstellung der Blockierstange 81 erlaubt einen besonders flexiblen Einsatz des Rahmenschlosses 21 für den Benutzer. Dieser Vorteil kann unabhängig davon erzielt werden, ob die Verriegelungseinrichtung des Rahmenschlosses einen geradlinig beweglichen Riegel 61 aufweist, d.h. ein solcher Riegel 61 ist bei der erläuterten Ausführungsform nicht zwingend erforderlich.

Das anhand der Fig. 1 bis 7 erläuterte Rahmenschloss 21 ist weitgehend in die Hinterradgabel 11 des Zweirads integriert (integrierte Module). Dies ist jedoch nicht zwingend erforderlich. Das Rahmenschloss 21 kann generell unterschiedliche bauliche Konfigurationen aufweisen, wie bereits erläutert (z.B. aufgesetzte Baueinheit, aufgesetzte Module).

### Bezugszeichenliste

- 11: Hinterradgabel
- 13: Aufnahmeraum
- 15: Speichenrad
- 21: Rahmenschloss
- 31: proximaler Führungsabschnitt
- 33: Einführöffnung von 31
- 41: distaler Führungsabschnitt
- 43: Führungshülse
- 51: Verriegelungseinrichtung
- 53: Schließzylinder
- 55: Schlüssel
- 57: Schlüsseleinführöffnung
- 59: Gehäuse
- 61: Riegel
- 63: Vorspannfeder
- 65: Einhängezapfen
- 67: Einhängezunge
- 69: Antriebsabschnitt
- 81: Blockierstange
- 83: proximales Ende
- 85: distales Ende
- 87: Halteabschnitt
- 89: Befestigungseinrichtung
- 93: proximale Verriegelungsvertiefung
- 95: distale Verriegelungsvertiefung
- R: Riegelbewegungsrichtung
- V: Versatzrichtung

## Patentansprüche

1. Rahmenschloss (21) für ein Zweirad, welches zumindest ein Speichenrad (15) aufweist,
mit einem proximalen Führungsabschnitt (31) und einem distalen Führungsabschnitt (41), die einen Aufnahmeraum (13) für das Speichenrad (15) umgeben, und
mit einer von dem proximalen Führungsabschnitt (31) und dem distalen Führungsabschnitt (41) separaten Blockierstange (81), die sich entlang einer Längsachse geradlinig erstreckt,
wobei die Blockierstange (81) ein proximales Ende (83) mit einer proximalen Verriegelungsvertiefung (93) und einem Halteabschnitt (87) sowie ein distales Ende (85) mit einer distalen Verriegelungsvertiefung (95) aufweist,
wobei die Blockierstange (81) entlang ihrer Längsachse mit dem distalen Ende (85) voraus durch den proximalen Führungsabschnitt (31) hindurch in den distalen Führungsabschnitt (41) einführbar ist, so dass die Blockierstange (81) in einer Blockierstellung den Aufnahmeraum (13) für das Speichenrad (15) durchquert und der Halteabschnitt (87) der Blockierstange (81) benachbart zu dem proximalen Führungsabschnitt (31) zu liegen kommt,
wobei an dem proximalen Führungsabschnitt (31) eine Verriegelungseinrichtung (51) angeordnet ist, die dazu ausgebildet ist, die Blockierstange (81) an der proximalen Verriegelungsvertiefung (93) zu verriegeln,
**dadurch gekennzeichnet,**
**dass** die Blockierstange (81) entlang ihrer Längsachse mit dem distalen Ende (85) voraus durch den distalen Führungsabschnitt (41) hindurch in den proximalen Führungsabschnitt (31) einführbar ist, so dass die Blockierstange (81) in einer entgegengesetzten Blockierstellung den Aufnahmeraum (13) für das Speichenrad (15) durchquert und der Halteabschnitt (87) der Blockierstange (81) benachbart zu dem distalen Führungsabschnitt (41) zu liegen kommt,
wobei die Verriegelungseinrichtung (51) dazu ausgebildet ist, die Blockierstange (81) an der distalen Verriegelungsvertiefung (95) zu verriegeln.

2. Rahmenschloss (21) nach Anspruch 1,
wobei die Verriegelungseinrichtung (51) einen Schließzylinder (53) aufweist, der mittels eines zugeordneten Schlüssels (55) betätigbar ist, wobei der Schließzylinder (53) eine Schlüsseleinführöffnung (57) für den zugeordneten Schlüssel (55) aufweist, wobei die Schlüsseleinführöffnung (57) relativ zu dem proximalen Führungsabschnitt (31) des Rahmenschlosses (21) entlang einer Versatzrichtung (V) versetzt ist,
wobei die Verriegelungseinrichtung (51) ferner einen Riegel (61) aufweist, der zwischen einer Verriegelungsstellung und einer Entriegelungsstellung beweglich gelagert ist, wobei der Riegel (61) in der Verriegelungsstellung in die proximale Verriegelungsvertiefung (93) der Blockierstange (81) eingreift und hierdurch die Blockierstange (81) verriegelt, wenn die Blockierstange (81) sich in der Blockierstellung befindet,
wobei der Riegel (61) mittels des Schließzylinders (53) im Wesentlichen geradlinig entlang einer Riegelbewegungsrichtung (R) antreibbar ist, wobei die Riegelbewegungsrichtung (R) parallel oder schräg zu der Versatzrichtung (V) verläuft.

3. Rahmenschloss (21) nach Anspruch 1,
wobei die Verriegelungseinrichtung (51) einen elektronischen Schließzylinder (53) aufweist, der mittels eines zugeordneten Identmittels entriegelbar ist, wobei der Schließzylinder (53) eine Authentisierungsfläche für das zugeordnete Identmittel aufweist, wobei die Authentisierungsfläche relativ zu dem proximalen Führungsabschnitt (31) des Rahmenschlosses (21) entlang einer Versatzrichtung (V) versetzt ist,
wobei die Verriegelungseinrichtung (51) ferner einen Riegel (61) aufweist, der zwischen einer Verriegelungsstellung und einer Entriegelungsstellung beweglich gelagert ist, wobei der Riegel (61) in der Verriegelungsstellung in die proximale Verriegelungsvertiefung (93) der Blockierstange (81) eingreift und hierdurch die Blockierstange (81) verriegelt, wenn die Blockierstange (81) sich in der Blockierstellung befindet,
wobei der Riegel (61) mittels des Schließzylinders (53) im Wesentlichen geradlinig entlang einer Riegelbewegungsrichtung (R) antreibbar ist, wobei die Riegelbewegungsrichtung (R) parallel oder schräg zu der Versatzrichtung (V) verläuft.

4. Rahmenschloss (21) nach Anspruch 2 oder 3,
wobei der Schließzylinder (53) einen drehbaren Antriebsabschnitt (69) aufweist, der mit dem Riegel (61) gekoppelt ist, um den Riegel (61) wahlweise in Richtung der Entriegelungsstellung oder in Richtung der Verriegelungsstellung anzutreiben; oder
wobei die Verriegelungseinrichtung (51) ferner eine Vorspannfeder (63) aufweist, die den Riegel (61) in Richtung der Verriegelungsstellung vorspannt, wobei der Schließzylinder (53) einen drehbaren Antriebsabschnitt (69) aufweist, der mit dem Riegel (61) gekoppelt ist, um den Riegel (61) wahlweise in Richtung der Entriegelungsstellung anzutreiben.

5. Rahmenschloss (21) nach einem der vorhergehenden Ansprüche,
wobei das Rahmenschloss (21) einen Verbindungabschnitt aufweist, der den proximalen Führungsabschnitt (31) und den distalen Führungsabschnitt (41) des Rahmenschlosses fest miteinander verbindet.

6. Rahmenschloss (21) nach einem der Ansprüche 1 bis 4,
wobei der proximale Führungsabschnitt (31) und der distale Führungsabschnitt (41) des Rahmenschlosses (21) separat voneinander und dazu ausgebildet sind, auf einen Rahmen des Zweirads aufgesetzt oder in einen Rahmen des Zweirads integriert zu werden.

7. Rahmenschloss (21) nach einem der vorhergehenden Ansprüche,
wobei die Blockierstange (81) an dem proximalen Ende (83) ferner eine Befestigungseinrichtung (89) für ein flexibles Sicherungselement aufweist.

## Claims

1. A frame lock (21) for a two-wheeler, which comprises at least one spoke wheel (15), said frame lock (21) comprising
a proximal guide section (31) and a distal guide section (41) which surround a receiving space (13) for the spoke wheel (15), and
a blocking rod (81) which is separate from the proximal guide section (31) and the distal guide section (41) and which extends in a straight line along a longitudinal axis,
wherein the blocking rod (81) has a proximal end (83), which has a proximal locking recess (93) and a holding section (87), and a distal end (85) having a distal locking recess (95),
wherein the blocking rod (81) can be introduced along its longitudinal axis with the distal end (85) at the front through the proximal guide section (31) into the distal guide section (41) so that the blocking rod (81) passes through the receiving space (13) for the spoke wheel (15) in a blocking position and the holding section (87) of the blocking rod (81) comes to lie adjacent to the proximal guide section (31),
wherein a locking device (51) is arranged at the proximal guide section (31) and is configured to lock the blocking rod (81) at the proximal locking recess (93),
**characterized in that**
the blocking rod (81) can be introduced along its longitudinal axis with the distal end (85) at the front through the distal guide section (41) into the proximal guide section (31) so that the blocking rod (81) passes through the receiving space (13) for the spoke wheel (15) in an opposite blocking position and the holding section (87) of the blocking rod (81) comes to lie adjacent to the distal guide section (41),
wherein the locking device (51) is configured to lock the blocking rod (81) at the distal locking recess (95).

2. A frame lock (21) according to claim 1,
wherein the locking device (51) has a lock cylinder (53) which can be actuated by means of an associated key (55), wherein the lock cylinder (53) has a key introduction opening (57) for the associated key (55), wherein the key introduction opening (57) is offset relative to the proximal guide section (31) of the frame lock (21) along an offset direction (V),
wherein the locking device (51) further has a latch (61) which is movably supported between a locking position and an unlocking position, wherein the latch (61) engages into the proximal locking recess (93) of the blocking rod (81) in the locking position and, as a result, locks the blocking rod (81) when the blocking rod (81) is in the blocking position,
wherein the latch (61) can be driven substantially in a straight line along a latch movement direction (R) by means of the lock cylinder (53), wherein the latch movement direction (R) extends parallel or obliquely to the offset direction (V).

3. A frame lock (21) according to claim 1,
wherein the locking device (51) has an electronic lock cylinder (53) which can be unlocked by means of an associated identification means, wherein the lock cylinder (53) has an authentication surface for the associated identification means, wherein the authentication surface is offset relative to the proximal guide section (31) of the frame lock (21) along an offset direction (V),
wherein the locking device (51) further has a latch (61) which is movably supported between a locking position and an unlocking position, wherein the latch (61) engages into the proximal locking recess (93) of the blocking rod (81) in the locking position and, as a result, locks the blocking rod (81) when the blocking rod (81) is in the blocking position,
wherein the latch (61) can be driven substantially in a straight line along a latch movement direction (R) by means of the lock cylinder (53), wherein the latch movement direction (R) extends parallel or obliquely to the offset direction (V).

4. A frame lock (21) according to claim 2 or 3,
wherein the lock cylinder (53) has a rotatable drive section (69) which is coupled to the latch (61) to selectively drive the latch (61) in the direction of the unlocking position or in the direction of the locking position; or
wherein the locking device (51) further has a preloading spring (63) which preloads the latch (61) in the direction of the locking position, wherein the lock cylinder (53) comprises a rotatable drive section (69) which is coupled to the latch (61) to selectively drive the latch (61) in the direction of the unlocking position.

5. A frame lock (21) according to any one of the preceding claims,
wherein the frame lock (21) has a connection section which fixedly connects the proximal guide section (31) and the distal guide section (41) of the frame lock to one another.

6. A frame lock (21) according to any one of the claims 1 to 4,
wherein the proximal guide section (31) and the distal guide section (41) of the frame lock (21) are separate from one another and are configured to be placed on a frame of the two-wheeler or to be integrated into a frame of the two-wheeler.

7. A frame lock (21) according to any one of the preceding claims,
wherein the blocking rod (81) further has a fastening device (89) for a flexible securing element at the proximal end (83).

## Revendications

1. Antivol de cadre (21) pour un deux-roues équipé d'au moins une roue à rayons (15),
comportant une portion de guidage proximale (31) et une portion de guidage distale (41) qui entourent un espace (13) de réception de la roue à rayons (15), et
comportant une tige de blocage (81) séparée de la portion de guidage proximale (31) et de la portion de guidage distale (41) et s'étendant en ligne droite le long d'un axe longitudinal,
dans lequel
la tige de blocage (81) présente une extrémité proximale (83) dotée d'un renfoncement de verrouillage proximal (93) et d'une portion de retenue (87), ainsi qu'une extrémité distale (85) dotée d'un renfoncement de verrouillage distal (95),
la tige de blocage (81) peut être insérée dans la portion de guidage distale (41), le long de son axe longitudinal, l'extrémité distale (85) étant à l'avant, à travers la portion de guidage proximale (31), de sorte qu'en position de blocage la tige de blocage (81) traverse l'espace (13) de réception de la roue à rayons (15) et que la portion de retenue (87) de la tige de blocage (81) vienne se placer au voisinage de la portion de guidage proximale (31), un dispositif de verrouillage (51) est disposé sur la portion de guidage proximale (31), lequel est conçu pour verrouiller la tige de blocage (81) au niveau du renfoncement de verrouillage proximal (93),
**caractérisé en ce que**
la tige de blocage (81) peut être insérée dans la portion de guidage proximale (31), le long de son axe longitudinal, l'extrémité distale (85) étant à l'avant, à travers la portion de guidage distale (41), de sorte qu'en position de blocage opposée, la tige de blocage (81) traverse l'espace (13) de réception de la roue à rayons (15) et que la portion de retenue (87) de la tige de blocage (81) vienne se placer au voisinage de la portion de guidage distale (41),
le dispositif de verrouillage (51) étant conçu pour verrouiller la tige de blocage (81) au niveau du renfoncement de verrouillage distal (95).

2. Antivol de cadre (21) selon la revendication 1,
dans lequel le dispositif de verrouillage (51) comprend un cylindre de fermeture (53) actionnable au moyen d'une clé associée (55), le cylindre de fermeture (53) présentant une ouverture d'insertion de clé (57) pour la clé associée (55), l'ouverture d'insertion de clé (57) étant décalée par rapport à la portion de guidage proximale (31) de l'antivol de cadre (21) selon une direction de décalage (V),
le dispositif de verrouillage (51) comprend en outre un verrou (61) monté mobile entre une position de verrouillage et une position de déverrouillage, le verrou (61) s'engageant dans le renfoncement de verrouillage proximal (93) de la tige de blocage (81) en position de verrouillage et verrouillant ainsi la tige de blocage (81) lorsque la tige de blocage (81) est en position de blocage,
le verrou (61) peut être entraîné par le cylindre de fermeture (53) sensiblement en ligne droite selon une direction de mouvement de verrou (R), la direction de mouvement de verrou (R) s'étendant parallèlement ou en oblique par rapport à la direction de décalage (V).

3. Antivol de cadre (21) selon la revendication 1,
dans lequel le dispositif de verrouillage (51) comprend un cylindre de fermeture électronique (53) susceptible d'être déverrouillé par un moyen d'identification associé, le cylindre de fermeture (53) présentant une surface d'authentification pour le moyen d'identification associé, la surface d'authentification étant décalée par rapport à la portion de guidage proximale (31) de l'antivol de cadre (21) selon une direction de décalage (V),
le dispositif de verrouillage (51) comprend en outre un verrou (61) monté mobile entre une position de verrouillage et une position de déverrouillage, le verrou (61) s'engageant dans le renfoncement de verrouillage proximal (93) de la tige de blocage (81) en position de verrouillage et verrouillant ainsi la tige de blocage (81) lorsque la tige de blocage (81) est en position de blocage,
le verrou (61) peut être entraîné par le cylindre de fermeture (53) sensiblement en ligne droite selon une direction de mouvement de verrou (R), la direction de mouvement de verrou (R) s'étendant parallèlement ou en oblique par rapport à la direction de décalage (V).

4. Antivol de cadre (21) selon la revendication 2 ou 3,
dans lequel le cylindre de fermeture (53) comprend une portion d'entraînement rotative (69) couplée au verrou (61) pour entraîner le verrou (61) sélectivement en direction de la position de déverrouillage ou en direction de la position de verrouillage ; ou
le dispositif de verrouillage (51) comprend en outre un ressort de précontrainte (63) qui met sous précontrainte le verrou (61) en direction de la position de verrouillage, le cylindre de fermeture (53) comprenant une portion d'entraînement rotative (69) couplée au verrou (61) pour entraîner le verrou (61) sélectivement en direction de la position de déverrouillage.

5. Antivol de cadre (21) selon l'une des revendications précédentes,
dans lequel l'antivol de cadre (21) comprend une portion de liaison reliant solidairement la portion de guidage proximale (31) et la portion de guidage distale (41) de l'antivol de cadre.

6. Antivol de cadre (21) selon l'une des revendications 1 à 4,
dans lequel la portion de guidage proximale (31) et la portion de guidage distale (41) de l'antivol de cadre (21) sont réalisées séparément l'une de l'autre et sont conçues pour être rapportées sur un cadre du deux-roues ou pour être intégrées dans un cadre du deux-roues.

7. Antivol de cadre (21) selon l'une des revendications précédentes,
dans lequel la tige de blocage (81) comprend en outre, à son extrémité proximale (83), un dispositif de fixation (89) pour un élément de sécurisation flexible.
